# EUROPÄISCHE PATENTANMELDUNG

(11) **EP 0 917 164 A2**
(43) Veröffentlichungstag der Anmeldung: **19.05.1999**
(21) Anmeldenummer: 98402652.6
(22) Anmeldetag: 26.10.1998
(51) Int. Cl.: H01F 27/28, H01F 27/32

(54) **Mehrfachparallelleiter für Wicklungen elektrischer Geräte und Maschinen**

(30) Priorität: 12.11.1997 DE 19750064
(71) Anmelder: ALCATEL, 75008 Paris (FR)
(72) Erfinder: Runge, Joachim, 34454 Arolsen (DE)
(74) Vertreter: Mende, Dirk

(57) **Zusammenfassung**

Bei einem trommelbaren Mehrfachparallelleiter (1), wie er für Wicklungen elektrischer Geräte und Maschinen, z. B. für elektrische Transformatoren, verwendet wird, ist eine Mehrzahl von jeweils einzeln elektrisch isolierten Teilleitern (3, 11) vorgesehen, die in zumindest zwei nebeneinander liegenden Stapeln (5) angeordnet und derart gekröpft sind, daß ihre Lage in den Stapeln (5) über die Länge des Mehrfachparallelleiters (1) vertauscht ist. In dem Mehrfachparallelleiter (1) ist wenigstens ein einen Kühlkanal (13) für ein Kühlmittel aufweisender rohrförmiger Teilleiter (11) vorgesehen, der eine direkte Kühlung der Wicklung ermöglicht.

## Beschreibung

Die Erfindung betrifft einen trommelbaren Mehrfachparallelleiter für Wicklungen elektrischer Geräte und Maschinen mit einer Mehrzahl von jeweils einzeln elektrisch isolierten Teilleitern, die in zumindest zwei nebeneinander liegenden Stapeln angeordnet und derart gekröpft sind, daß ihre Lage in den Stapeln über die Länge des Mehrfachparallelleiters vertauscht ist.

Elektrische Leiter großen Querschnitts für Wicklungen von elektrischen Geräten und Maschinen, insbesondere von Transformatoren, werden in eine Anzahl voneinander elektrisch isolierter Teilleiter aufgeteilt, die an ihren Enden parallel geschaltet werden. Die sogenannten Drilleiter, die eine beträchtliche Länge aufweisen und aus diesem Grund trommelbar sind, haben einen in etwa rechteckigen Gesamtquerschnitt und sind aus einer Mehrzahl von einen flachen, zumindest annähernd rechteckigen Querschnitt aufweisenden, mit einer elektrischen Isolierung versehenen und aus Kupfer, Aluminium oder einer Legierung davon bestehenden massiven Teilleitern ausgebildet. Um den Einfluß der Stromverdrängung möglichst gering zu halten, wird über die Länge des Drilleiters eine sich gegebenenfalls wiederholende Lagevertauschung der Teilleiter im Gesamtquerschnitt des Mehrfachparallelleiters vorgenommen. Zu diesem Zweck werden die Teilleiter in einem kontinuierlichen Fertigungsprozeß mittels eines geeigneten Werkzeuges an vorbestimmten Stellen gekröpft und die Lage der Teilleiter im Mehrfachparallelleiter durch das Kröpfen und Verschieben der Teilleiter entsprechend geändert. Der auf diese Weise erzielte regelmäßige Wechsel der Lage des einzelnen Teilleiters im Querschnitt des Mehrfachparallelleiters hat den Vorteil sehr geringer Wirbelstromverluste. Das Abbiegen oder Kröpfen der Teilleiter erfolgt beispielsweise flachseitig um die Längsachse des Mehrfachparallelleiters herum, wobei die Folge der Teilleiter im Querschnitt des Mehrfachparallelleiters auch über mehrere sich wiederholende Zyklen beibehalten wird.

Bei Transformatoren, aber auch bei anderen elektrischen Geräten und Maschinen führen die auftretenden elektrischen Verluste zu einer erheblichen Erwärmung der für die Wicklungen verwendeten Mehrfachparallelleiter. Es ist daher erforderlich, die Wärme aus den spulenförmig gewickelten Mehrfachparallelleitern durch ein geeignetes Kühlmittel abzuführen. Dabei hängt die Effizienz der Kühlung wesentlich von der Dicke der die massiven isolierten Teilleiter des Mehrfachparallelleiters gemeinsam umschließenden Umwicklung aus Papierbändern ab. Eine dicke Papierumwicklung führt zu einer guten elektrischen Isolation des Mehrfachparallelleiters. Eine optimale Kühlung des Mehrfachparallelleiters wird dagegen dann erreicht, wenn auf eine zusätzliche elektrische Isolation des Mehrfachparallelleiters vollständig verzichtet wird, die Mehrfachparallelleiter also frei von irgendeiner Umhüllung gewickelt werden. Dies kommt aber bei Transformatoren allenfalls auf der Niederspannungsseite in Betracht.

Werden mit einer Papierisolation versehene Mehrfachparallelleiter gewickelt, so ist es bekannt, zwischen den Windungen Distanzplättchen einzulegen, um auf diese Weise einen oder mehrere Ölkanäle zur besseren Kühlung der Wicklung auszubilden. Dabei besteht jedoch die Gefahr, daß die Papierbänder die Kühlkanalquerschnitte versperren und das verwendete Kühlmittel nur eingeschränkt zirkulieren kann. Zudem muß beim Herstellen der Wicklung auf die geringe Festigkeit der Papierisolation Rücksicht genommen werden.

In der EP 0 746 861 B1 ist ein Mehrfachparallelleiter beschrieben, bei dem die Teilleiter mit einem Webband umsponnen sind, dessen Schuß- und/oder Kettfäden aus Polyester oder einem aus Glasseide und Polyester bestehenden Mischgarn hergestellt sind. Um eine höhere Festigkeit dieser Umspinnung zu erzielen, kann das Webband zusätzlich mit einem teilvernetzten Epoxidharz vorimprägniert sein.

Der Erfindung liegt das Problem zugrunde, einen trommelbaren und kontinuierlich herstellbaren Mehrfachparallelleiter für Wicklungen elektrischer Geräte und Maschinen, insbesondere für elektrische Transformatoren zu schaffen, der auf möglichst einfache Weise eine wirkungsvolle Kühlung der Wicklung des elektrischen Geräts bzw. der elektrischen Maschine gewährleistet.

Dieses Problem wird durch die Erfindung gelöst, indem wenigstens ein einen Kühlkanal für ein Kühlmittel aufweisender rohrförmiger Teilleiter vorgesehen ist.

Die durch die Erfindung erzielbaren Vorteile bestehen insbesondere darin, daß durch den wenigstens einen rohrförmig ausgebildeten Teilleiter, der in seinem Innern einen Kühlkanal für ein Kühlmittel aufweist, die Verlustwärme unmittelbar aus dem gewickelten Mehrfachparallelleiter abgeführt werden kann. Der erfindungsgemäße Mehrfachparallelleiter kann daher auch problemlos und ohne zusätzliche Maßnahmen auf der Hochspannungsseite eines Transformators eingesetzt werden, auf der die isolierten Teilleiter des Mehrfachparallelleiters aus Isolationsgründen gemeinsam von einer elektrischen Papierisolation möglichst großer Wanddicke umschlossen sind, da die direkte Kühlung des Mehrfachparallelleiters von der Dicke der Papierisolation oder anderer elektrisch isolierender Schichten nicht beeinflußt wird. Die bekannten zur Kühlung der Wicklung verwendeten Maßnahmen wie Geflechte oder Abstandshalter sind dagegen nur bei niedrigen Spannungen, also beispielsweise auf der Niederspannungsseite eines Transformators anwendbar. Bei Transformatoren, die aufgrund ihrer hohen Leistung eine Zwangskühlung der Wicklungen durch eine kontinuierliche Umwälzung eines Transformatorenöls mittels Pumpen aufweisen, ist es möglich, den oder die in Teilleitern des gewickelten Mehrfachparallelleiters vorgesehenen Kühlkanäle mit diesem Kühlkreislauf zu verbinden und das Transformatorenöl durch diese Kühlkanäle zu leiten. Auf diese Weise läßt sich die unmittelbare Kühlung der Mehrfachparallelleiter auf besonders einfache Weise sicherstellen. Bei der Herstellung des Mehrfachparallelleiters kann die Verdrillung der rohrförmigen Teilleiter, die beispielsweise ebenso wie die bekannten massiven Teilleiter mit einer Lackisolierung versehen sind, gemeinsam mit den massiven Teilleitern in einem kontinuierlichen Prozeß erfolgen, so daß eine einfache und kostengünstige Herstellung des erfindungsgemäßen Mehrfachparallelleiters möglich ist.

Durch die in den Unteransprüchen aufgeführten Merkmale sind vorteilhafte Weiterbildungen und Verbesserungen der Erfindung möglich.

Für einen einfachen und möglichst wenig veränderten Aufbau des Mehrfachparallelleiters ist es von Vorteil, wenn der rohrförmige Teilleiter zumindest einen massiven Teilleiter ersetzt.

Aus dem gleichen Grund ist es ebenfalls von Vorteil, wenn zumindest ein Stapel aus rohrförmigen Teilleitern vorgesehen ist. Wird dieser Stapel aus rohrförmigen Teilleitern zwischen zwei Stapeln aus massiven Teilleitern angeordnet, so ist der Mehrfachparallelleiter besonders einfach und kostengünstig ohne größere Änderungen an den Verdrillwerkzeugen herstellbar.

Vorteilhaft ist es für eine besonders wirkungsvolle Wärmeabfuhr und direkte Kühlung des Mehrfachparallelleiters, wenn ausschließlich rohrförmige Teilleiter vorgesehen sind. Ein solcher Mehrfachparallelleiter ist zudem einfach herstellbar.

Um eine möglichst gute elektrische Isolation des rohrförmigen Teilleiters gegenüber den massiven Teilleitern sicherzustellen und ein Aufbringen einer vielschichtigen Lackisolierung auf den rohrförmigen Teilleiter zu vermeiden, ist es von Vorteil, wenn der rohrförmige Teilleiter mit einer Umwicklung aus einem Flächenisolierstoff wie einer Kunststoffolie oder einem Papierband z. B. aus einem mit Aramidfasern verstärkten Papier versehen ist.

Aus dem gleichen Grund ist es ebenfalls vorteilhaft, wenn der rohrförmige Teilleiter mit einer Umspinnung aus Glasgarnen versehen ist. Für einen möglichst guten Halt dieser Umspinnung auf dem rohrförmigen Teilleiter ist es von Vorteil, wenn die Umspinnung aus Glasgarnen mit einem Lack imprägniert ist.

Soll der rohrförmige Teilleiter aus Kupfer bestehen, so ist es für eine einfache Herstellung des rohrförmigen Teilleiters von Vorteil, den Teilleiter aus einem runden Rohr durch Pressen und/oder Ziehen herzustellen.

Für eine hohe Festigkeit des rohrförmigen Teilleiters und zur Verringerung der Gefahr, daß der rohrförmige Teilleiter bei der Herstellung des Mehrfachparallelleiters verformt wird, ist es von Vorteil, wenn der rohrförmige Teilleiter aus Stahl hergestellt ist.

Insbesondere in diesem Fall ist es für eine einfache Herstellung des rohrförmigen Teilleiters vorteilhaft, wenn der Teilleiter aus einem gefalteten und nahtlos geschweißten Metallband ausgebildet ist.

Für eine einfache und kostengünstige Herstellung des rohrförmigen Teilleiters ist es von Vorteil, wenn dieser aus einem Kunststoff, vorzugsweise aus einem eine hohe mechanische und thermische Festigkeit aufweisenden Kunststoff ausgebildet ist.

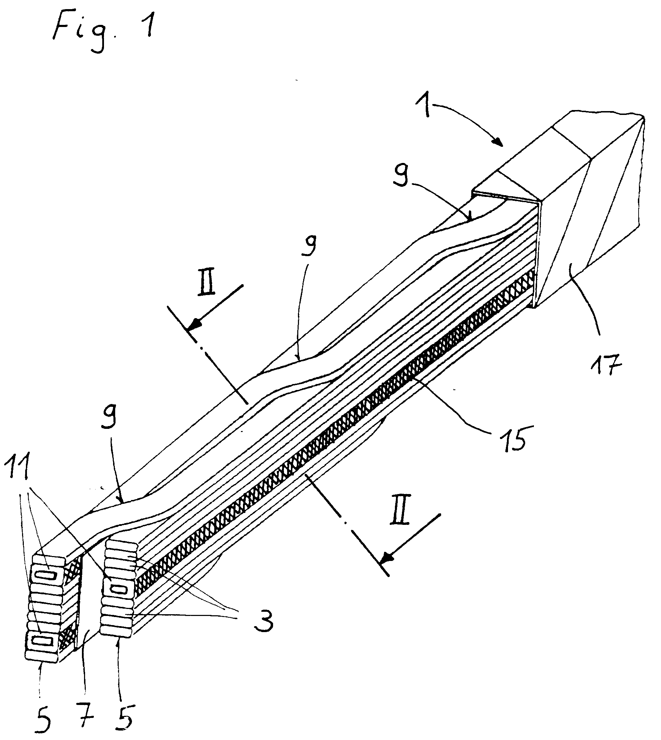

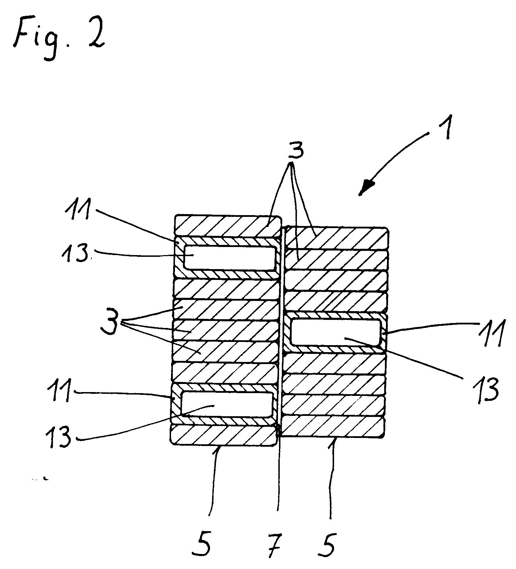

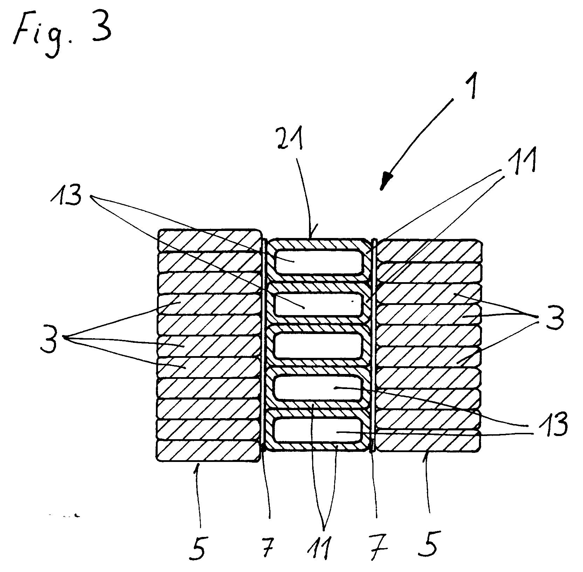

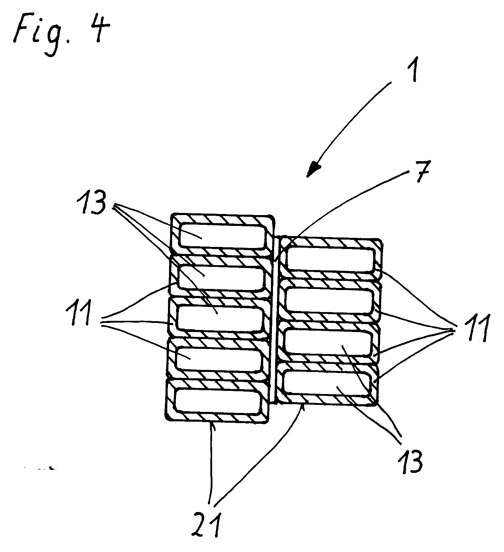

Drei Ausführungsbeispiele der Erfindung sind in der Zeichnung vereinfacht dargestellt und in der nachfolgenden Beschreibung näher erläutert. Es zeigen Fig. 1 ein erstes Ausführungsbeispiel eines erfindungsgemäßen Mehrfachparallelleiters, Fig. 2 einen Schnitt entlang der Linie II-II in Fig. 1, Fig. 3 einen Schnitt durch einen erfindungsgemäßen Mehrfachparallelleiter nach einem zweiten Ausführungsbeispiel sowie Fig. 4 einen Schnitt durch einen erfindungsgemäßen Mehrfachparallelleiter nach einem dritten Ausführungsbeispeil.

Der in den Fig. 1 und 2 beispielhaft dargestellte trommelbare Mehrfachparallelleiter 1, der als Drilleiter großer Länge insbesondere für die Verwendung in Transformatorenwicklungen ausgebildet ist und spulenförmig gewickelt wird, hat eine Mehrzahl von flachen, einen annähernd rechteckigen Querschnitt aufweisenden massiven Teilleitern 3, die z. B. in zwei nebeneinander liegenden Stapeln 5 angeordnet sind. Zwischen den beiden Stapeln 5 kann ein längslaufendes Papierband 7 vorgesehen sein, wie in den Fig. 1 und 2 dargestellt ist. Dieses Papierband 7 bildet eine Zwischenlage zwischen den beiden Stapeln 5 und erhöht die mechanische Stabilität des Mehrfachparallelleiters 1. Jeder der Teilleiter 3 ist z. B. mit einer eigenen Isolierlackschicht versehen, die eine ausreichende elektrische Isolierung zwischen benachbarten Teilleitern 3 sicherstellt. Um die mechanische Festigkeit der elektrischen Isolation zu verbessern, kann die Isolierlackschicht jedes Teilleiters 3 zusätzlich z. B. mit einem teilvernetzten Epoxidharz überzogen sein. Anstelle einer Isolierlackschicht kann die elektrische Isolation der zugfesten Teilleiter 3 auch durch eine Umwicklung mit einem Flächenisolierstoff, beispielsweise einer geeigneten Folie aus Kunststoff, einem Papierband z. B. aus Aramidpapier oder ähnlichen Werkstoffen ausgebildet sein. Die Teilleiter 3 sind in vorbestimmten Abständen in einem kontinuierlichen Fertigungsprozeß durch Abbiegen flach gekröpft, so daß sich ihre Lage im Gesamtquerschnitt des Mehrfachparallelleiters 1 in vergleichsweise kurzen Abständen regelmäßig ändert. Die Kröpfungsstellen sind in der Fig. 1 mit 9 bezeichnet.

Bei diesem ersten Ausführungsbeispiel sind in den beiden Teilleiter-Stapeln 5 des Mehrfachparallelleiters 1 z. B. insgesamt drei rohrförmige, außen eine annähernd rechteckige Form aufweisende Teilleiter 11 angeordnet. Diese rohrförmigen Teilleiter 11 weisen einen in ihrer Längsrichtung verlaufenden Kühlkanal 13 für ein Kühlmittel auf und ersetzen beispielsweise jeweils zwei übereinander angeordnete massive Teilleiter 3. Die rohrfömigen Teilleiter 11 sind z. B. ebenso wie die massiven Teilleiter 3 aus Kupfer ausgebildet. Sie können aus einem runden Rohr durch Pressen und/oder Ziehen hergestellt werden. Es ist aber ebenfalls möglich, die rohrförmigen Teilleiter 11 aus einem Stahl herzustellen, so daß sie eine höhere Festigkeit und Formbeständigkeit aufweisen. In diesem Fall bietet es sich an, die rohrförmigen Teilleiter 11 aus einem gefalteten und in Längsrichtung nahtlos geschweißten Stahlband auszubilden. Die rohrförmigen Teilleiter 11 können aber auch aus einem eine gute mechanische und thermische Festigkeit aufweisenden Kunststoff ausgebildet sein. Als Kühlmittel kann beispielsweise ein übliches Transformatorenöl, Kühlwasser oder ein Gas wie z. B. Wasserstoff verwendet werden.

Da das bei massiven Teilleitern übliche Herstellen der Isolation durch Aufbringen zahlreicher dünner Schichten eines Isolierlacks bei rohrförmigen Teilleitern 11 unter Umständen Schwierigkeiten bereiten kann, ist bei dem ersten Ausführungsbeispiel, wie in der Fig. 1 angedeutet, jeder der rohrförmigen Teilleiter 11 mit einer Umspinnung 15 aus Glasgarnen versehen, auf die zur Erhöhung ihrer Festigkeit gegebenenfalls ein Lack aufgebracht ist. Es ist aber ebenfalls möglich, die Isolation der rohrförmigen Teilleiter 11 durch Aufbringen eines Isolierlacks oder eines Flächenisolierwerkstoffs wie einer Folie aus Kunststoff oder eines als Band vorliegenden Papiers, z. B. eines zugfesten Aramidpapiers, auszubilden.

Über dem so gebildeten verdrillten Bündel von massiven Teilleitern 3 und rohrförmigen Teilleitern 11 ist eine gemeinsame Umwicklung 17 beispielsweise aus Papierbändern aufgebracht. Es ist aber ebenfalls möglich, die gemeinsame Umwicklung 17 der Teilleiter 3 und 11 aus anderen faden- oder bandförmigen Materialien wie z. B. Gewebebändern oder aus Kunststoff bestehenden Bändern oder Fäden auszubilden. Abweichend von dem in der Fig. 1 und 2 dargestellten Ausführungsbeispiel kann die Umwicklung 17 auch Lücken aufweisen.

Das in der Fig. 3 dargestellte Ausführungsbeispiel eines Mehrfachparallelleiters 1 unterscheidet sich von dem in den Fig. 1 und 2 dargestellten ersten Ausführungsbeispiel im wesentlichen dadurch, daß zwei ausschließlich massive Teilleiter 3 aufweisende Stapel 5 sowie ein dazwischen angeordneter, ausschließlich rohrförmige Teilleiter 11 aufweisender Stapel 21 vorgesehen ist. Zur Erhöhung der mechanischen Festigkeit des Mehrfachparallelleiters 1 ist zwischen den beiden aus massiven Teilleitern 3 gebildeten Stapeln 5 und dem aus rohrförmigen Teilleitern 11 gebildeten Stapel 21 jeweils ein Papierband 7 angeordnet. Ein solches Ausführungsbeispiel hat den Vorteil, daß bei der Verdrillung der Teilleiter die rohrförmigen Teilleiter 11 ihre Lage im Gesamtquerschnitt unverändert beibehalten können und nur die massiven Teilleiter 3 der beiden Stapel 5 gekröpft und in ihrer Lage im Gesamtquerschnitt verschoben werden. Dies erfordert zur Herstellung des direkt gekühlten Mehrfachparallelleiters 1 nur geringfügige Änderungen der vorhandenen Werkzeuge. Ansonsten entspricht der in der Fig. 3 dargestellte Mehrfachparallelleiter 1 im wesentlichen dem in den Fig. 1 und 2 dargestellten Mehrfachparallelleiter.

Da die rohrförmigen Teilleiter 11 in der Regel im Vergleich zu den massiven Teilleitern 3 eine größere Höhe aufweisen werden, kann es unter Umständen erforderlich sein, zur Angleichung der Höhe des aus den rohrförmigen Teilleitern 11 gebildeten mittleren Stapels 21 an die aus den massiven Teilleitern 3 gebildeten äußeren Stapel 5 auch in dem mittleren Stapel 21 einen oder wenige massive Teilleiter anzuordnen.

In Weiterbildung des in der Fig. 3 dargestellten Ausführungsbeispiels ist es ebenfalls möglich, zur Herstellung des Mehrfachparallelleiters 1 ausschließlich rohrförmige Teilleiter 11 zu verwenden, so daß der Mehrfachparallelleiter 1 beispielsweise aus zwei oder mehr Stapeln von rohrförmigen Teilleitern 11 basteht. Ein solches Ausführungsbeispiel ist in der Fig. 4 dargestellt. Der in der Fig. 4 beispielhaft dargestellte Mehrfachparallelleiter 1 weist zwei Stapel 21 von einen in Längsrichtung verlaufenden Kühlkanal 13 aufweisenden, rohrförmigen Teilleitern 11 auf. Durch die ausschließliche Verwendung rohrförmiger Teilleiter 11 identischer Höhe ist dieser Mehrfachparallelleiter 1 besonders einfach und kostengünstig und ohne größere Änderungen an den Werkzeugen herstellbar. Ansonsten entspricht dieses dritte Ausführungsbeispiel im wesentlichen dem in den Fig. 1 und 2 dargestellten ersten Ausführungsbeispiel, auf das zur Vermeidung von Wiederholungen Bezug genommen wird.

## Patentansprüche

1. Trommelbarer Mehrfachparallelleiter für Wicklungen elektrischer Geräte und Maschinen mit einer Mehrzahl von jeweils einzeln elektrisch isolierten Teilleitern (3; 11), die in zumindest zwei nebeneinander liegenden Stapeln (5; 21) angeordnet und derart gekröpft sind, daß ihre Lage in den Stapeln (5; 21) über die Länge des Mehrfachparallelleiters (1) vertauscht ist, **dadurch gekennzeichnet**, daß wenigstens ein einen Kühlkanal (13) für ein Kühlmittel aufweisender rohrförmiger Teilleiter (11) vorgesehen ist.

2. Mehrfachparallelleiter nach Anspruch 1, **dadurch gekennzeichnet**, daß der rohrförmige Teilleiter (11) zumindest einen massiven Teilleiter (3) ersetzt.

3. Mehrfachparallelleiter nach Anspruch 1 oder 2, **dadurch gekennzeichnet**, daß zumindest ein ausschließlich aus rohrförmigen Teilleitern (11) gebildeter Stapel (21) vorgesehen ist.

4. Mehrfachparallelleiter nach einem der Ansprüche 1 bis 3, **dadurch gekennzeichnet**, daß ausschließlich rohrförmige Teilleiter (11) vorgesehen sind.

5. Mehrfachparallelleiter nach einem der Ansprüche 1 bis 4, **dadurch gekennzeichnet**, daß der rohrförmige Teilleiter (11) mit einer Umspinnung (15) aus Glasgarnen versehen ist.

6. Mehrfachparallelleiter nach Anspruch 5, **dadurch gekennzeichnet**, daß die Umspinnung (15) aus Glasgarnen mit einem Lack imprägniert ist.

7. Mehrfachparallelleiter nach einem der Ansprüche 1 bis 4, **dadurch gekennzeichnet**, daß der rohrförmige Teilleiter (11) mit einer Umwicklung aus einem Flächenisolierstoff versehen ist.

8. Mehrfachparallelleiter nach einem der Ansprüche 1 bis 7, **dadurch gekennzeichnet**, daß der rohrförmige Teilleiter (11) aus Kupfer hergestellt ist.

9. Mehrfachparallelleiter nach einem der Ansprüche 1 bis 7, **dadurch gekennzeichnet**, daß der rohrförmige Teilleiter (11) aus Stahl hergestellt ist.

10. Mehrfachparallelleiter nach einem der Ansprüche 1 bis 9, **dadurch gekennzeichnet**, daß der rohrförmige Teilleiter (11) aus einem runden Rohr durch Pressen und/oder Ziehen ausgebildet ist.

11. Mehrfachparallelleiter nach einem der Ansprüche 1 bis 9, **dadurch gekennzeichnet**, daß der rohrförmige Teilleiter (11) aus einem gefalteten und nahtlos geschweißten Metallband ausgebildet ist.

12. Mehrfachparallelleiter nach einem der Ansprüche 1 bis 7, **dadurch gekennzeichnet**, daß der rohrförmige Teilleiter (11) aus einem Kunststoff ausgebildet ist.

13. Mehrfachparallelleiter nach einem der Ansprüche 1 bis 12, **dadurch gekennzeichnet**, daß zumindest drei nebeneinander liegende Stapel (5; 21) aus Teilleitern (3; 11) vorgesehen sind, wobei die äußeren Stapel (5) ausschließlich massive Teilleiter (3) aufweisen und der zumindest eine mittlere Stapel sowohl massive Teilleiter (3) als auch rohrförmige Teilleiter (11) aufweist.
